# EUROPEAN PATENT APPLICATION

(11) **EP 1 408 426 A1**
(43) Date of publication of application: **14.04.2004**
(21) Application number: 03255481.8
(22) Date of filing: 02.09.2003
(51) Int. Cl.: G06F 17/30

(54) **Information access system and method**

(30) Priority: 10.10.2002 US 269897
(71) Applicant: Agilent Technologies, Inc., Palo Alto, CA 94306 (US)
(72) Inventor: Hamilton, Bruce, Menlo Park, CA 94025 (US)
(74) Representative: Exell, Jonathan Mark

(57) **Abstract**

Techniques for information access which enable speed versus quality tradeoffs. An information system according to the present techniques obtains a tradeoff of speed versus quality which is desired by a user posing a question. If the tradeoff specifies a time constraint, then the information system generates an answer to the question while meeting the time constraint and if the tradeoff specifies a quality constraint, then the information system generates the answer to meet the quality constraint. The present techniques enable the selection of methods for generating answer to a questions to adapt to the changing needs of users on a per question basis and per user basis.

## Description

### Field of Invention

The present invention pertains to the field of information access. More particularly, this invention relates to information access with speed versus quality tradeoff.

### Art Background

A variety of information systems exist which are designed to provide answers to questions posed by users. Such questions may pertain to a measurable characteristic of interest in relation to a time and/or place of interest. A measurable characteristic may be an environmental condition such as temperature, pressure, humidity, sound level, etc., or other variable such as electrical and/or electromagnetic signal strength, as well as measurable chemical, mechanical characteristics, etc.

For example, a user involved in designing and/or maintaining a wireless communication system may desire to know what level of transmitted signal power was or will be present at a specified physical location at a specified time. In another example, a user involved in a manufacturing system may desire to know what level of part failure did or will occur at a specified point in a manufacturing process. These are only a couple of example applications of an information system and numerous others are possible.

The speed with which an information system generates an answer to a question typically depends on the method undertaken in generating the answer. In addition, the quality of the response usually depends on the method undertaken in generating the answer. Methods employed in an information system that yield a relatively fast answer may yield a relatively low quality answer while methods that yield a relatively high quality answer may cause a relatively slow response.

Prior information systems are usually designed under an a priori assumption that a user desires either a particular minimum level of quality or a particular minimum speed of response. Unfortunately, such prior systems are typically unable to adapt to the changing needs of a user or to the needs of different users. For example, there may be some situations in which a user desires a high quality answer regardless of the speed of the response and there may be other situations in which a user desires a fast answer in lieu of quality. It would be desirable to provide an information system that is capable of adapting to these changing needs of a user or to the various needs of different users.

### SUMMARY OF THE INVENTION

Techniques for information access are disclosed which enable speed versus quality tradeoffs. An information system according to the present techniques obtains a tradeoff of speed versus quality which is desired by a user posing a question. If the tradeoff specifies a time constraint, then the information system generates an answer to the question while meeting the time constraint and if the tradeoff specifies a quality constraint, then the information system generates the answer to meet the quality constraint. The present techniques enable the selection of methods for generating answer to a questions to adapt to the changing needs of users on a per question basis and per user basis.

Other features and advantages of the present invention will be apparent from the detailed description that follows.

According to one aspect of the present invention, there is provided a method according to claim 1.

According to another aspect of the present invention, there is provided a system according to claim 8.

### BRIEF DESCRIPTION OF THE DRAWINGS

The present invention is described with respect to particular exemplary embodiments thereof and reference is accordingly made to the drawings in which:
**Figure 1** shows a method for information access according to the present teachings;
**Figure 2** shows an information system according to the present techniques;
**Figure 3** illustrates a set of samples of a continuous quantity representing some phenomena for use in determining an answer to a question posed by a user.

### DETAILED DESCRIPTION

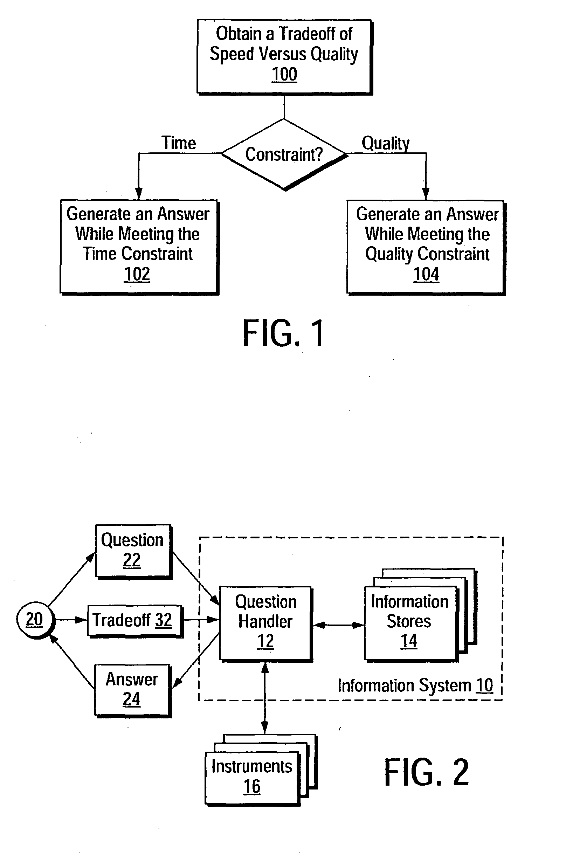

**Figure 1** shows a method for information access according to the present teachings. At step 100, a tradeoff of speed versus quality which is desired by a user is obtained.

The speed versus quality tradeoff obtained at step 100 may be expressed as a time constraint. One example of a time constraint is a maximum time that is to be consumed in generating the answer. Another example of a time constraint is a minimum delay in providing the answer to the user.

Alternatively, the speed versus quality tradeoff may be expressed as a quality constraint. The quality constraint may specify accuracy, precision, or recency. One example of a quality constraint is a minimum level of data resolution in the answer. Another example of a quality constraint a minimum confidence level in the answer. Yet another example of a quality constraint is a maximum level of uncertainty in the answer. Yet another example of a quality constraint is a recency of the answer.

If the tradeoff obtained at step 100 specifies a time constraint then step 102 is performed. If the tradeoff obtained at step 100 specifies a quality constraint then step 104 is performed.

At step 102, an answer to the question is generated while meeting the time constraint. Step 102 may be performed by relaxing the quality of the answer obtained. Step 102 may include generating the answer with a highest possible quality given the time constraint. Step 102 may include selecting a method for obtaining the answer in response to the time constraint. The method selected may include a method for estimating the answer and/or an operation for acquiring a set of information pertaining to the answer. At step 102, the method for estimating and/or operation for acquiring are selected with the goal of meeting the time constraint specified in the tradeoff. For example, methods for estimating tend to vary in speed and quality. Some methods perform an iterative computation which yields a higher quality answer with each iteration. At step 102, an iterative method may be selected which iterates only as many times as the time constraint allows.

At step 104, the answer to the question is generated while meeting the quality constraint. Step 104 may be performed by consuming as much time as is needed to generate an answer with the desired quality. Step 104 may include generating the answer in a shortest possible time given the quality constraint. This may also include the step of selecting a method for obtaining the answer in response to the quality constraint. The method selected may include a method for estimating the answer and/or an operation for acquiring a set of information pertaining to the answer. If a quality constraint is based on accuracy then an estimate may be based on measurements obtained using instruments of suitable precision. If a quality constraint is based on data resolution then methods for estimating may be selected on that basis. For example, an iterative method may be used which iterates until a minimum data resolution specified in a quality constraint is obtained.

The tradeoff obtained at step 100 may in some embodiments be expressed by a user as a continuous variable that indicates the relative tradeoff/compromise between speed and quality. An example of this is a number between 0 and 1 where 0 indicates minimum desire for speed and maximum desire for quality and 1 indicates maximum desire for speed and minimum desire for quality and .5 indicates equal desires for speed and quality and where other values are treated analogously. In such an embodiment, the answer to a question is generated by emphasizing speed/quality accordingly. For example, if the user specifies a tradeoff of .7, the answer is generated by analogously weighting the selection of methods that speed the answer at the expense of quality and if the user specifies a tradeoff of .3, the answer is generated by analogously weighting the selection of methods that increase the quality of the answer at the expense of time.

**Figure 2** shows an information system 10 according to the present techniques. The information system 10 includes a question handler 12 which is capable of generating an answer 24 to a question 22 formulated by a user 20. The question 22 specifies the nature and parameters of the question 22. The user 20 specifies a tradeoff 32 which is a speed versus quality tradeoff to be observed by the question handler 12 when generating the answer 24.

In one embodiment, the tradeoff 32 is entered by the user 20 while posing the question 22 to the information system 10. In other embodiments, the tradeoff 32 may be specified in a user profile or user preferences which are maintained by the information system 10 for the user 20. The information system 10 may store a default tradeoff for each user which may be overridden by user input.

The methods employed by the question handler 12 in generating the answer 24 may include reading previously obtained information from an information store 14, obtaining current information using one or more of a set of instruments 16, generating a program schedule for obtaining information needed to formulate the answer 24, or estimating the answer 24 based on previously obtained and/or current information and/or similar relevant information, or any combination of these methods as well as numerous others.

In one embodiment, the information system 10 provides answers regarding measurable characteristics in a corresponding area/environment. The corresponding area/environment may be relatively confined, for example within a building or buildings are limited geographic area, or may be relatively widely dispersed.

In this embodiment, the question 22 pertains to a measurable characteristic that occurred or that occurs or that will occur at a specified location in the corresponding area/environment at a specified time. The location and time are specified in the question 22. The measurable characteristic may be of an environmental condition such as temperature, pressure, humidity, sound level, etc., or other variable such as electrical and/or electromagnetic signal strength, chemical, mechanical variables etc.

The actions that may be undertaken in the information system 10 when generating the answer 24 in this embodiment may include reading a previously obtained measurement from the information store 14 if a measurement for the specified time and location indicated in the question 22 are recorded in the information store 14. If a measurement for the specified time or location is not recorded in the information store 14 then the question handler 12 may interpolate the measurement from information that is recorded in the information store 14. For example, the information store 14 may hold recorded measurements for locations near the specified location and/or near the specified time and the question handler 12 may use this information to estimate the answer 24. Alternatively, the question handler 12 may schedule an operation for obtaining measurements for formulating the answer 24 using the instruments 16 if a measurement for the specified time and location is not available in the information store 14 or is of insufficient quality.

If the specified time is in the future, the question handler 12 may schedule an operation for obtaining measurements using the instruments 16. Alternatively, the question handler 12 may extrapolate the answer 24 based on information recorded in a information store 14 if the specified time is in the future.

The speed at which the question handler 12 generates the answer 24 in general depends on the activities undertaken in the information system 10 in determining the answer 24. For example, accessing information from the information store 14 may be performed relatively quickly, while calculating estimates, interpolations/extrapolations, and obtaining new measurements using the instruments 16 may be relatively slow. If the specified time in the question 22 is relatively far into the future then this greatly slows the process of obtaining the measurement explicitly using the instruments 16.

In addition, the quality of the answer 24 may depend on the activities undertaken in determining the answer 24. For example, an estimate of the answer 24 generated by the question handler 12 may be based on a most recent actual measurement, or on a moving average, or on a prediction of a future measurement or on an actual measurement obtained at a time in the future, or on a relatively fast interpolation or extrapolation using a few samples or on a relatively high quality interpolation or extrapolation using many samples. Distributed systems may sharpen the speed versus quality tradeoff because values may be obtained at widely separated times or significant time may be required to retrieve stored values - for example from remote information stores. In addition, the quality of the answer may depend on the precision of the instruments 16 which are used to obtain measurements on which the answer 24 is based.

Consider an example in which the question 22 poses a request for transmitted signal strength present at an intersection of two roadways in a city at 4PM on the previous day and that the tradeoff specifies a time constraint of 5 seconds. In response, the question handler 12 may read a signal strength measurement obtained at 4PM on the previous day at the intersection from the information store 14 and provide it as the answer 24 and meet the 5 second time constraint. If a measurement for the intersection at 4PM the previous day is not logged in the information store 14 then the question handler 12 may estimate it using measurements that are logged in the information store 14. For example, the question handler 12 may use 4PM previous day samples obtained from areas near the intersection or 4PM samples from other days obtained at the intersection or areas near the intersection. The question handler 12 may refine the estimate given the time constraint of 5 seconds and then deliver the highest quality estimate it can while meeting that time constraint. For example, the question handler 12 may use samples obtained by selected ones of the instruments 16 which provide the highest quality reading of transmitted signal strength if the time constraint allows.

Consider an example in which the question 22 poses a request for transmitted signal strength present at an intersection of two roadways in a city at 4PM on the previous day and that the tradeoff specifies a quality constraint of plus/minus 3 db. In response, the question handler 12 may read a signal strength measurement obtained at 4PM on the previous day at the intersection from the information store 14 and provide it as the answer 24 if it is available and it meets the quality constraint. The question handler 12 may estimate it using measurements that are logged in the information store 14 and possibly by using the instruments 16 to obtain additional samples for use in the estimate in order to meet the quality constraint. If the question handler 12 obtains additional samples it may use an instrument having a precision that will meet the quality constraint even if use of that instrument consumes additional time. For example, an instrument capable of yielding at least a plus/minus 3 db measurement may be used.

Consider an example in which the question 22 poses a request for transmitted signal strength present at an intersection of two roadways in a city at 10AM on the next day. In response, the question handler 12 schedules the use of the instruments 16 to obtain the desired measurement if any time constraint specified by the tradeoff 32 permits. If not, the question handler 12 may estimate the answer 24 using measurements that are logged in the information store 14 and possibly by using current readings obtained by the instruments 16 depending on the time and quality constraints.

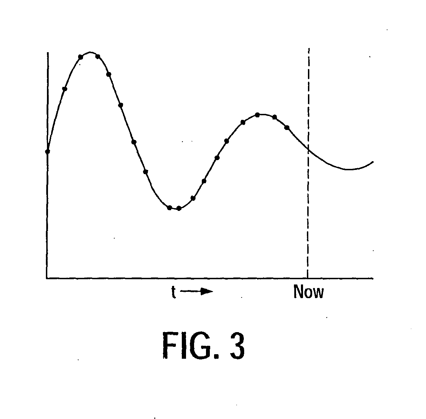

**Figure 3** illustrates a set of samples of a continuous quantity (Q) representing some phenomena. The quantity Q is discretely sampled at times which are substantially periodic according to a known period. It is assumed that the quantity Q is a function of time, extending into both the past and the future. The quantity Q has bounded value and first derivative, and bounded frequency.

Every sample is an estimate of Q for a neighborhood around the sample. Given a bound on dQ/dt, the inaccuracy of the estimate may be bounded. This enables the question handler 12 to interpolate between two samples, obtained for example from the information store 14, yielding a higher quality estimate at points far from a single sample and a bound on the inaccuracy of the estimate. This also enables the question handler 12 to interpolate among more than two samples, yielding a potentially higher quality estimate and a bound on the inaccuracy of the estimate.

More than two samples may be used to estimate the frequencies of the quantity Q with more samples yielding a higher quality estimate, and more closely-spaced samples yielding a higher quality estimate of the high-frequency components of the quantity Q.

If the question 22 poses a request for a value of Q(t) where t is in the past and strictly between two samples, the question handler 12 may employ a variety of methods in rendering the answer 24. The question handler 12 may return the oldest sample newer than t or the newest sample older than t depending on which is faster to retrieve. The question handler 12 may interpolate between the two samples on either side t, or interpolate among more than two samples.

These methods as set forth require increasing time to generate the answer 24 and yield increasing quality in the answer 24. In each case it is possible to estimate the quality. If the time to retrieve a sample is known, and if retrieval time dominates computation time, then the delay incurred by each choice may also be estimated.

If the question 22 poses a request for a value of Q(t) where t is in the past but is more recent than any sample, the question handler 12 may return the most recent sample, examine the n most recent samples and extrapolate to t, or wait until the next sample and then interpolate. This also covers the case in which t is the current instant. As before, these require increasing delay and yield increasing quality. If the sample period is known, the delay incurred by each choice may be estimated.

If the question 22 poses a request for a value of Q(t) where t is in the future, the question handler 12 may accumulate samples occurring before t and extrapolate these samples to t, wait until the last sample occurring at or before t is available and return that, or wait until the first sample after t is available and interpolate. This also covers the case in which t is the current instant.

If none of the available methods yields a desired quality specified in the tradeoff 32, then the question handler 12 may negotiate with the user 20 for a lower quality. If that negotiation fails then the question handler 12 returns with no value or signals an error in the answer 24.

Similarly, if none of the available methods yields a desired maximum delay specified in the tradeoff 32, then the question handler 12 may negotiate with the user 20 for a longer delay. If that negotiation fails then the question handler 12 returns with no value or signals an error in the answer 24.

The user 20 may ask the information system 10 about a value of a function or property of some variable, x, by specifying x in the question 22. A method of giving the information system 10 more freedom to satisfy a constraint on speed or quality is for the user 20 to specify a range of values of x rather than a single value. Thus, if the user 20 asks the information system 10 for the value of *f*([2, 6]) and provides a quality constraint in the tradeoff 32, the information system 10 is free to see whether it has stored (or can compute) any exact values of *f* in the range 2-6. If it does, the information system 10 may return any of such values. If the information system 10 has stored (or can compute) approximate values in that range, it may return the most exact one (or, if it takes different lengths of time to retrieve or compute values, the quickest one that meets the quality requirement). As before, if the information system 10 has no stored values in that range and cannot compute any, then it can fail to return a value or signal an error, or both.

In these cases where the user provides the information system 10 with a range of values for the independent variable x, the result is more helpful to the user if the information system 10 returns, as part of the answer 24, which value for x it used in producing the answer 24. For example, if the user 20 asks the value of *f*([2, 6]) and the information system 10 finds that it has a stored an exact value for *f*(3), it should return that value in the answer 24 and an indication that it used x=3 in producing the answer 24.

The same principle may be applied for queries with a delay constraint, If the user 20 asks the information system 10 for the value of *f*([2, 6]) and provides a delay constraint in the tradeoff 32, the information system 10 may then choose whichever value of x between 2 and 6 gives the quickest result. If several do, the information system 10 may choose the highest quality one which meets the delay constraint in the tradeoff 32. In either case, the information system 10 may indicate as part of the answer 24 which value of x was used in determining the answer 24. If no answer can be found while meeting the delay constraint in the tradeoff 32, the information system 10 may fail to return a value or signal an error, or both.

Similarly, this same principle may be applied for functions or properties of more than one variable. If the user 20 is interested in properties of a location in space at a particular time, for example - *f*(longitude, latitude, height, time) - the user 20 may provide a range of longitudes, a range of latitudes, a range of heights, a range of times, or any combination of these ranges in the question 22. The information system 10 may in response select which set of values best meets the quality or delay constraints in the tradeoff 32, and return those values along with the answer 24. If no set of values meets the constraint, the information system 10 may fail to return a value or signal an error, or both.

In some embodiments, a tradeoff may be made applicable to all questions submitted by a user during a session. For example, the user 20 may enter a tradeoff at the start of a session with the information system 10 and that tradeoff is used by the question handler 12 throughout the duration of the session. Such a session tradeoff may also be specified in a user profile maintained on the information system 10, for example in a memory or storage device, or may be entered using a specific command. A default tradeoff specification may be overridden by the user explicitly with a question or using a user profile/preference or session command entry, etc. The information system 10 may include a user input mechanism, such as a user interface commonly used in computer systems, that enable a user to override a default or stored preference of the tradeoff. This may be the same mechanism used to pose a question.

The present techniques enable a user to express a tradeoff in a way that is meaningful to the user, i.e. - a result within X seconds, or with no more than Y uncertainty. This is in contrast to a system in which a system priority may be assigned to an application - for example priority=3 on a 1-10 scale. Although a priority=3 may inform a system on its use of resources, it holds little meaning in informing a user of the speed at which a result will be obtained or a quality to be expected of a result.

The present techniques enable a user to choose a tradeoff between a good result or a quick result. The present techniques enable a user to express a preference for use all the time, or for each question. The present techniques work independently of any implementation. This is in contrast to systems which assign priorities and in which the result depends upon other activities in the system. The present techniques may be implemented in an instrument or application which is slightly more complex, but which gives a user significantly more power.

The present techniques enable a user to render as a matter of choice the particulars of the speed versus quality tradeoff. The present techniques also enable unification of past/present/future in generating the answer 24. The unification lies in posing the question 22 with an explicit time rather than in generating an answer 24. The user asks for a value at a time in the same way, i.e. by naming the time, whether the time is past, present, or future. The response of the information system 10 is adapted to these three cases. This is in contrast to prior systems in which users ask a storage system to look up a result if the answer is in the past, or read an instrument of the answer is in the present, or schedule a program on a computer connected to an instrument if the answer is in the future. There are two differences between each of these pairs of user actions - the form of the question and the entity queried. The present techniques benefit a user because a query about the future turns, by the mere passage of time, into a query about the past, yet the present techniques to do not require the user to make any changes in,response. Similarly, a user can repeat a query at a later time without making any change, or ask about a different time by changing only the time in the query, not the form of the query nor the entity to which it is posed.

The present techniques enable a user to tradeoff different types of quality against delay. The types of quality including accuracy, precision, and recency. Accuracy and precision are different properties. For example, a group of shots at a target may all be very close together but all far from the bulls-eye and are therefore precise but not accurate. A different group may be farther apart but have a geometric average which is exactly on the bulls-eye and are therefore accurate but imprecise. A small group centered on the bulls-eye is both accurate and precise. Sometimes users desire accuracy and sometimes users desire precision Sometimes an information system can deliver accuracy and sometimes the best it can do is high precision - for example if it is supplied with biased data.

Recency applies to time-varying data and describes a relative amount by which a data value is "up-to-date." Values which are newly-observed are more recent than values observed earlier. Values which are predicted for or are extrapolated to a time very near the present are more recent than values predicted for or extrapolated to earlier times.

The present invention applies equally well to different types of quality include accuracy, precision, and recency. The term "quality" as used herein refers to whichever of these properties that the information system 10 is designed to deliver.

If a producer and consumer of data in an information system are connected by a buffer, the producer may detect that the buffer is full when attempting to write a value into the buffer. This may meant that either the producer is writing too fast or the consumer is reading too slowly. An appropriate response may be to sample more slowly, flush the buffer before writing, overwrite the tail, or signal an error. Any choice other than signaling an error affects the recency of the data seen by the consumer, and thus interacts with the delay/quality tradeoffs discussed above. The consumer may detect that the buffer is empty when attempting to read a value from the buffer. This may mean that either consumer is reading too fast or the producer is writing too slowly. The consumer may read more slowly, make do with the previous value, or signal an error. Again, if an error is not signaled, the result affects the delay/quality tradeoff.

The foregoing detailed description of the present invention is provided for the purposes of illustration and is not intended to be exhaustive or to limit the invention to the precise embodiment disclosed. Accordingly, the scope of the present invention is defined by the appended claims.

## Claims

1. A method for information access in a computer system comprising the steps of:
obtaining a tradeoff of speed versus quality desired by a user posing a question;
if the tradeoff specifies a time constraint, the computer system is operative to generate an answer to the question while meeting the time constraint;
if the tradeoff specifies a quality constraint, the computer system is operative to generate an answer to the question while meeting the quality constraint

2. The method of claim 1, wherein the step of generating an answer to the question while meeting the time constraint includes the step of selecting a method for obtaining the answer in response to the time constraint.

3. The method of claim 2, wherein the step of selecting a method for obtaining the answer in response to the time constraint includes the step of selecting a method for estimating the answer in response to the time constraint.

4. The method of claim 2, wherein the step of selecting a method for obtaining the answer in response to the time constraint includes the step of selecting an operation for acquiring a set of information pertaining to the answer in response to the time constraint.

5. The method of any preceding claim, wherein the step of generating the answer to meet the quality constraint includes the step of selecting a method for obtaining the answer in response to the quality constraint.

6. The method of claim 5, wherein the step of selecting a method for obtaining the answer in response to the quality constraint includes the step of selecting a method for estimating the answer in response to the quality constraint.

7. The method of claim 5, wherein the step of selecting a method for obtaining the answer in response to the quality constraint includes the step of selecting an operation for acquiring a set of information pertaining to the answer in response to the quality constraint.

8. An information system, comprisinq:
an information store (14) arranged to hold a set of information;
a computer implemented question handler (12) operative to obtain a question (22) from a user (20) which pertains to the information and to obtains a tradeoff (32) of speed versus quality desired by the user (20), the question handler (12) being arranged to generate an answer (24) to the question (22) in response to the tradeoff (34).

9. The information system of claim 8, further comprising a set of user preferences which specify the tradeoff (32).

10. The information system of claim 9, further comprising means for obtaining a user input that overrides the tradeoff (32) obtained from the user preferences.

11. A computer program comprising computer program code means for performing all of the steps of any of claims 1 to 7 when said program is run on a computer.

12. A computer program as claimed in claim 11 embodied on a computer readable medium.
